# EUROPEAN PATENT APPLICATION

(11) **EP 4 614 349 A1**
(43) Date of publication of application: **10.09.2025**
(21) Application number: 24208252.7
(22) Date of filing: 23.10.2024
(51) Int. Cl.: G06F 16/3329

(54) **SYSTEM AND METHOD FOR REQUEST PROCESSING BASED ON MULTI-AGENT COLLABORATION**

(30) Priority: 07.03.2024 KR 20240032349; 21.05.2024 KR 20240065676
(71) Applicant: Samsung SDS Co., Ltd., Seoul 05510 (KR)
(72) Inventor: Yang, Jae Young, 05510 SEOUL (KR); Hong, Yoo Jin, 05510 SEOUL (KR); Yoo, Jae Chun, 05510 SEOUL (KR)
(74) Representative: Glawe, Delfs, Moll

(57) **Abstract**

Provided is a computing system for processing a user's request based on multi-agent collaboration. The computing system comprises an agent information storage device storing detailed information on each of a plurality of agents, the detailed information including information on a responsible field of each agent and an agent execution system executing a first agent responsible for processing a user request introduced through a first channel and a second agent responsible for processing a user request introduced through a second channel different from the first channel.

## Description

### BACKGROUND

### Technical Field

The present disclosure relates to a computing system and method for processing a user's request based on multi-agent collaboration, and more particularly, to a computing system and method for generating a processing result as much as possible even for a request outside an expert domain of an agent module in a situation in which the agent module for providing a processing service for a user request introduced through a specific channel is provided.

### Description of the Related Art

A question-answering service based on artificial intelligence technology is provided. For example, a large language model (LLM) is trained using learning data from various fields to generate answers in the form of natural language to questions of various domains.

Provided is an agent module that provides an answer to a user query of a specific domain by using a large language model. The agent module may generate an answer to the user query through a query for the large language model or a call of an external application programming interface (API). The agent module operating as an autonomous agent may respond to a user query requesting to perform a specific action by generating a task for generating an answer to the user query and executing the generated task. However, the agent module has a limitation that it may respond only to a query or request of a domain corresponding to an expert domain of the agent.

Therefore, for task automation, it is necessary to implement a number of expert agents capable of handling tasks specialized for a specific domain (specific task or system scope). However, in the process of processing one user query, various task processing capabilities beyond the scope that one agent module can process may be required, and thus collaboration between multiple expert agents is required.

The existing multi-agent collaboration methodology is proposed to operate for a specific task. For example, Du et al. "Improving Factuality and Reasoning in Language Models through Multiagent Debate" (hereinafter, "Du 2023") proposes a converging method in which multiple Retrieval-Augmented Generation (RAG) agents generate a correct answer while exchanging their answers, to reduce Hallucination answers when generating RAG-based knowledge answers. The purpose of the reference Du 2023 is to generate RAG answers, and each agent in the reference Du 2023 has a pre-determined collaboration operation to generate new answers by referring to mutual answers. That is, when one of a number of expert agents receives a user query that requires a task processing capability beyond his or her processing capability range, it is difficult for the disclosure of the reference Du 2023 to apply to generating an answer to the user query through collaboration with other expert agent.

In addition, Qian et al. "Communicative Agents for Software Development" (hereinafter, "Quan 2023") and Tang et al. "MedAgents: Large Language Models as Collaborators for Zero-shot Medical Reasoning" (hereinafter, "Tang 2023") propose a methodology in which expert agents specialized for different roles collaborate together. However, Quan 2023 and Tang 2023 define expert agents in roles necessary for a set purpose, such as software development and medical treatment proposal, and the method of collaboration between expert agents is pre-designed step by step. Therefore, when one of a number of expert agents receives a user request requiring a task processing capability beyond his or her processing capability range, it is difficult for the disclosures of the reference Quan 2023 and the reference Tang 2023 to apply to processing the user request through collaboration with other expert agent.

### [Prior Art Reference]

### [Patent Reference]

US Laid-Open No. 2023/0368284(Laid-open on November 16, 2023)
Chinese Laid-Open Patent No. 117744795(Laid-open on March 22, 2024)

### [Non-Patent Reference]

Yilun Du, Shuang Li, Antonio Torralba, Joshua B. Tenenbaum, Igor Mordatch. Improving Factuality and Reasoning in Language Models through Multiagent Debate. https://arxiv.org/abs/2305.14325, 2023.
Chen Qian, Xin Cong, Wei Liu, Cheng Yang, Weize Chen, Yusheng Su, Yufan Dang, Jiahao Li, Juyuan Xu, Dahai Li, Zhiyuan Liu, Maosong Sun. Communicative Agents for Software Development. https://arxiv.org/abs/2307.07924, 2023.
Xiangru Tang, Anni Zou, Zhuosheng Zhang, Ziming Li, Yilun Zhao, Xingyao Zhang, Arman Cohan, Mark Gerstein. MedAgents: Large Language Models as Collaborators for Zero-shot Medical Reasoning. https://arxiv.org/abs/2311.10537, 2023.

### BRIEF SUMMARY

An object of the present disclosure is to provide a system and method for generating a processing result for a user request through collaboration with another agent when one of multiple agents receives the user request requiring a task processing capability beyond his or her processing capability range.

Another object of the present disclosure is to provide a system and method in which each agent self-determines a multi-agent collaboration-based processing method for a user request requiring a task processing capability beyond a processing capability range even without prior determination of a method of collaboration or a process of collaboration.

Still another object of the present disclosure is to provide a system and method for request processing based on multi-agent collaboration, in which a multi-agent collaboration-based request processing service is provided only by adding natural language-based peer-to-peer (p2p) communication between agents.

Further still another object of the present disclosure is to provide a system and method in which when any one of multiple agents receives a user request requiring a task processing capability beyond its processing capability range, an optimal agent, which will collaborate to generate a processing result for the user request, may be automatically selected from a plurality of other agents, whereby a processing result for a user request requiring processing capabilities in various domains may be generated.

The objects of the present disclosure are not limited to those mentioned above and additional objects of the present disclosure, which are not mentioned herein, will be clearly understood by those skilled in the art from the following description of the present disclosure.

According to an aspect of the inventive concept, there is provided a system for request processing based on multi-agent collaboration. The system may comprise an agent information storage device storing detailed information on each of a plurality of agents, the detailed information including information on a responsible field of each agent and an agent execution system executing a first agent responsible for processing a user request introduced through a first channel and a second agent responsible for processing a user request introduced through a second channel different from the first channel. Wherein the first agent determines whether to be capable of processing a task for generating a processing result for the user request by itself, and when the first agent determines that it cannot process the task by itself, transmits, to the second agent, a first task processing request signal requesting to process at least a portion of steps constituting the task, and the second agent is determined among the plurality of agents by using the detailed information on each of the plurality of agents.

In some embodiments, the first agent may generate a final processing result for the user request by using first external processing result data received from the second agent in response to the first task processing request signal and output the final processing result through the first channel. wherein the first task processing request signal is to request processing of a first portion of the steps constituting the task, and the first agent may generate an internal processing result for the other portion except the first portion among the steps constituting the task and generate the final processing result by using the first external processing result and the internal processing result. wherein the first task processing request signal is to request processing of the first portion of the steps constituting the task, the agent execution system may further execute a third agent responsible for processing a user query introduced through a third channel different from the first channel and the second channel, and the first agent may further transmit, to the third agent, a second task processing request signal requesting processing of a second portion of the steps constituting the task, generate an internal processing result for the other portion except the first portion and the second portion among the steps constituting the task, and generates the final processing result by using a second external processing result received from the third agent in response to the second task processing request signal, the first external processing result and the internal processing result.

In some embodiments, the information on the responsible field includes domain information, role information, capability information and one or more skill sets.

In some embodiments, the first agent may process the user request introduced through the first channel by using a first large language model (LLM) and the second agent may process the user request introduced through the second channel by using a second large language model, and the first large language model may be fine-tuned using first learning data including knowledge of a first domain and the second large language model may be fine-tuned using second learning data including knowledge of a second domain different from the first domain.

In some embodiments, the first agent may process the user request introduced through the first channel by further using a first API set and process the user request introduced through the second channel by further using a second API set, and the second API set may include one or more APIs that are not included in the first API set.

In some embodiments, the first agent may process a user request introduced through a first co-pilot channel by using a first large language model and a first API set, the second agent may process a user request introduced through a second co-pilot channel by using the first large language model and a second API set, and the second API set may include one or more APIs that are not included in the first API set.

In some embodiments, the first agent may transmit the first task processing request signal to the second agent by using natural language-based peer-to-peer (p2p) communication of a predefined format, and the second agent may transmit data of a first external processing result, which is a response to the first task processing request signal, to the first agent. In addition, the first task processing request signal may have a format that includes a text of a request target step and a result text of a previous step of the request target step. In addition, the first task processing request signal may have a format that further includes an immediate execution flag indicating whether the second agent will immediately perform generation of a first external processing result according to the first task processing request signal. In addition, the first task processing request signal may have a format that further includes user context information of a user who has input the user request.

In some embodiments, the first agent may generate a large language model prompt for configuring a task for generating a processing result for the user request in a step-by-step manner and receives a task definition result of a step-by-step manner from a large language model that has received the large language model prompt. In addition, the first agent may determine that it cannot process a task for generating a response processing result for the user request by itself when the received task definition result includes one or more steps that cannot be performed by the first agent. In addition, the first agent may determine a first step as a step that cannot be performed by the first agent when an API to be paged for performing the first step among one or more steps included in the task definition result does not exist in a list of APIs that can be paged by the first agent. In addition, the large language model transmitting the task definition result of the step-by-step manner to the first agent may be used by the first agent to generate a final processing result for the user request introduced through the first channel and be fine-tuned using first learning data of a first domain corresponding to the first agent,

In some embodiments, the second agent may generate a large language model prompt for configuring a task corresponding to a text of a request target step included in the first task request signal in a step-by-step manner, receive a task definition result of a step-by-step manner from a large language model that has received the large language model prompt, and transmit the received task definition result to the first agent in response to the first task processing request signal. In addition, the second agent may generate the large language model prompt specifying an output format to include confidence level information of the task definition result and allows the confidence level information to be further included in the task definition result transmitted to the first agent, when a value of an immediate execution flag included in the first task processing request signal is a value indicating that the second agent should not immediately generate a first external processing result according to the first task processing request signal. In addition, the first agent may finally determine whether to request the second agent to execute the request target step by using the confidence level information included in the task definition result received from the second agent.

In some embodiments, the second agent may generate a large language model prompt for configuring a task corresponding to a text of a request target step included in the first task request signal in a step-by-step manner, receive a task definition result of a step-by-step manner from a large language model that has received the large language model prompt, determines that it cannot process the task corresponding to the text of the request target step included in the first task request signal by itself when one or more steps that cannot be processed by the second agent are included in the task definition result received from the large language model, and transmit a signal expressing non-performance to the first agent in response to the first task request signal.

In some embodiments, the first agent may generate a large language model prompt for evaluating first external processing result data received from the second agent in response to the first task processing request signal, receive an evaluation result of the first external processing result data from a large language model that has received the large language model prompt, and use the evaluation result of the first external processing result data when determining whether to transmit, to the second agent, the first task processing request signal for a subsequent user request introduced through the first channel.

According to another aspect of inventive concept, there is provided a method for request processing based on multi-agent collaboration, which is performed by a computing system. The method may comprise acquiring a user request introduced through a first channel, generating a large language model prompt for configuring a task for generating a processing result for the user request in a step-by-step manner and receiving a task definition result of a step-by-step manner from a large language model that has received the large language model prompt, determining whether the first agent responsible for the first channel can process the user request by itself, by using the received task definition result, providing the second agent with a first task processing request signal for requesting processing of at least a portion of steps constituting the task when the first agent determines that it cannot process the user request by itself and generating a final processing result for the user request by using first external processing result data provided from the second agent as a response to the first task processing request signal, and outputs the final processing result, wherein the second agent is a software module responsible for processing a user request introduced through a second channel which is a channel separate from the first channel.

### BRIEF DESCRIPTION OF THE DRAWINGS

The above and other aspects and features of the present disclosure will become more apparent by describing in detail exemplary embodiments thereof with reference to the attached drawings, in which:
FIG. 1 is a schematic view illustrating a request processing system according to one embodiment of the present disclosure;
FIG. 2 is a view illustrating exemplary detailed information for each of a plurality of agents, which is referenced in some embodiments of the present disclosure;
FIGS. 3 to 6 are other schematic views illustrating a request processing system described with reference to FIG. 1;
FIG. 7 is a view illustrating an example of a large language model prompt generated for configuring a task for generating a processing result for a user request in a step-by-step manner in some embodiments of the present disclosure;
FIG. 8 is a view illustrating an example of a task processing request signal transmitted and received between agents in some embodiments of the present disclosure;
FIG. 9 is a view illustrating a first example of a large language model prompt generated in response to receiving a task request signal from another agent in some embodiments of the present disclosure;
FIG. 10 is a view illustrating a first example of a response signal to a task processing request signal transmitted and received between agents in some embodiments of the present disclosure;
FIG. 11 is a view illustrating a second example of a large language model prompt generated in response to receiving a task request signal from another agent in some embodiments of the present disclosure;
FIG. 12 is a view illustrating a second example of a response signal to a task processing request signal transmitted and received between agents in some embodiments of the present disclosure;
FIG. 13 is a view illustrating an example of a large language model prompt generated for evaluation of a task processing result received from another agent in some embodiments of the present disclosure;
FIG. 14 is a flow chart illustrating a method for request processing based on multi-agent collaboration according to another embodiment of the present disclosure; and
FIG. 15 is a hardware schematic illustrating a computing system described in some embodiments of the present disclosure.

### DETAILED DESCRIPTION OF THE DISCLOSURE

Hereinafter, preferred embodiments of the present disclosure will be described with reference to the attached drawings. Advantages and features of the present disclosure and methods of accomplishing the same may be understood more readily by reference to the following detailed description of preferred embodiments and the accompanying drawings. The present disclosure may, however, be embodied in many different forms and should not be construed as being limited to the embodiments set forth herein. Rather, these embodiments are provided so that this disclosure will be thorough and complete and will fully convey the concept of the disclosure to those skilled in the art, and the present disclosure will only be defined by the appended claims.

In adding reference numerals to the components of each drawing, it should be noted that the same reference numerals are assigned to the same components as much as possible even though they are shown in different drawings. In addition, in describing the present disclosure, when it is determined that the detailed description of the related well-known configuration or function may obscure the gist of the present disclosure, the detailed description thereof will be omitted.

Unless otherwise defined, all terms used in the present specification (including technical and scientific terms) may be used in a sense that can be commonly understood by those skilled in the art. In addition, the terms defined in the commonly used dictionaries are not ideally or excessively interpreted unless they are specifically defined clearly. The terminology used herein is for the purpose of describing particular embodiments only and is not intended to be limiting of the disclosure. In this specification, the singular also includes the plural unless specifically stated otherwise in the phrase.

In addition, in describing the component of this disclosure, terms, such as first, second, A, B, (a), (b), can be used. These terms are only for distinguishing the components from other components, and the nature or order of the components is not limited by the terms. If a component is described as being "connected," "coupled" or "contacted" to another component, that component may be directly connected to or contacted with that other component, but it should be understood that another component also may be "connected," "coupled" or "contacted" between each component.

Hereinafter, embodiments of the present disclosure will be described with reference to the attached drawings.

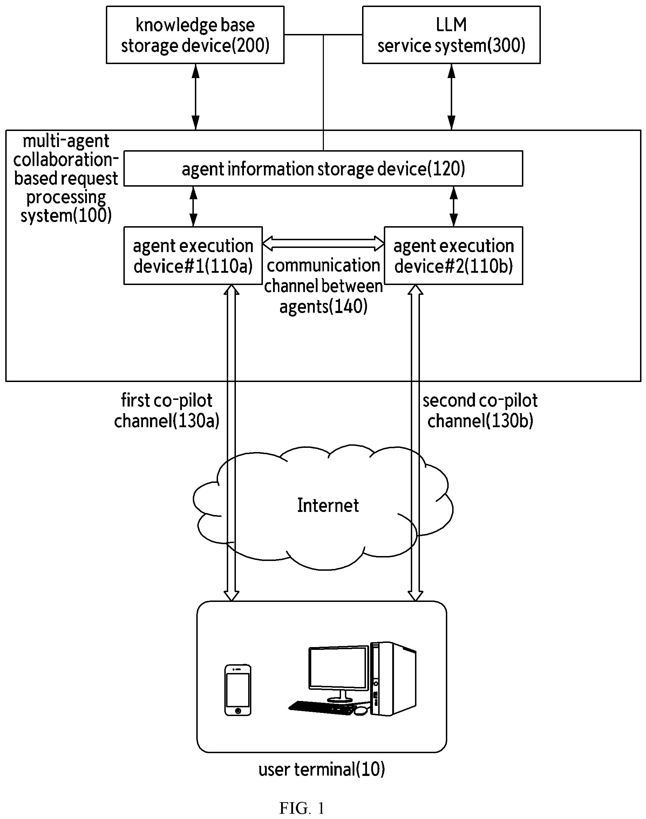

A configuration and operation of a request processing system according to one embodiment of the present disclosure will be described with reference to FIG. 1. As shown in FIG. 1, the request processing system according to the present embodiment may include a multi-agent collaboration-based request processing system 100 and a user terminal 10.

The user terminal 10 transmits data of a user request to the multi-agent collaboration-based request processing system 100. The user request is a request to execute one or more actions, and may be described as text in the form of a natural language. For example, the user request may indicate that a first action, a second action and a third action are sequentially executed and the result of execution is transmitted to a specific recipient by e-mail.

The multi-agent collaboration-based request processing system 100 is a computing system that is connected to the user terminal 10 through Internet, receives a user request from the user terminal 10, generates a processing result for the user request and transmits the generated processing result to the user terminal 10, and may be a computing system composed of one or more physical servers or one or more cloud compute instances.

Hereinafter, the multi-agent collaboration-based request processing system 100 will be abbreviated as a "service system" to assist convenience of understanding.

The service system 100 may include a plurality of agent execution devices 110a and 110b. Each agent execution device may execute a different agent. For example, a first agent execution device 110a may be a physical server or a cloud compute instance, which executes the first agent, and the second agent execution device 110b may be a physical server or a cloud compute instance, which executes the first agent.

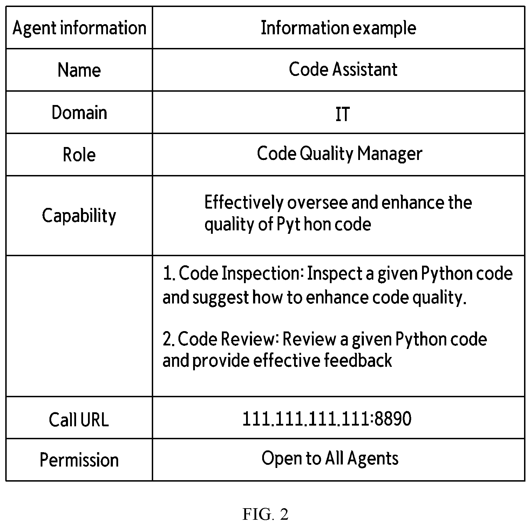

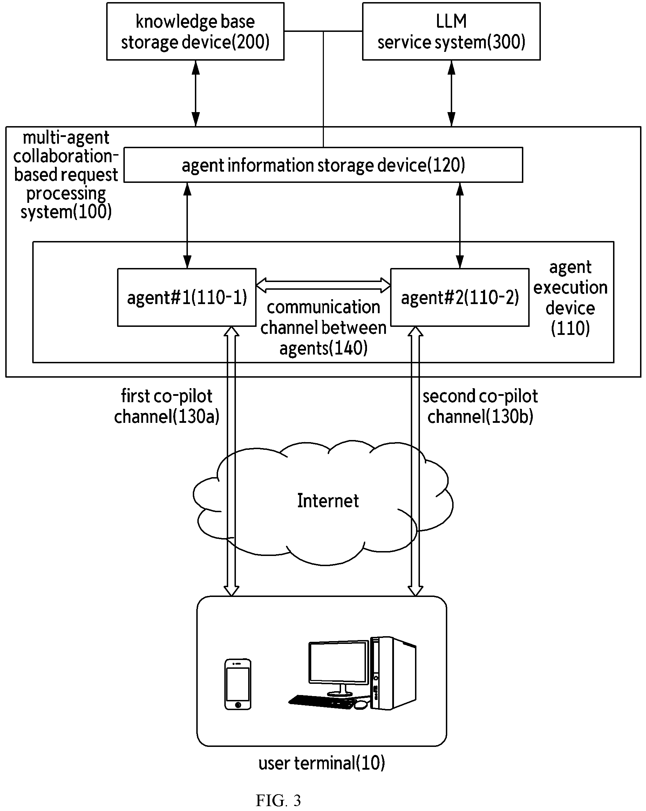

Although will be described later with reference to FIGS. 2 and 3 to 6, the service system according to the present embodiment may include various types of agent execution systems that execute a plurality of different agents. The agent execution system may include a plurality of agent execution devices 110a and 110b that execute a specific agent as shown in FIGS. 1 and 4 to 6, or may include a single agent execution device that executes a plurality of agents as shown in FIG. 3.

Different agents may mean that they are different from each other in an expert domain in charge and a channel in charge. A user's request may be input through the channel, and the user's request may be input through a chat window displayed by being overlaid on a service screen. For example, the chat window may be displayed on the service screen to provide a co-pilot service. That is, in some embodiments, the channel may be a co-pilot channel. Of course, in some other embodiments, the channel may be implemented in a type other than the co-pilot channel. For example, the channel may be configured in the form of a chatbot, a messenger chat room, an automated response system (ARS), an agent service of a home IoT system, an agent service of an autonomous vehicle or a help display screen of a client application. Hereinafter, the description will be based on the assumption that the channel is configured in the form of a co-pilot channel through some embodiments. Of course, it should not be interpreted that the channel according to the present disclosure is limited to the co-pilot channel by such description.

It should be understood that the first agent is a host agent of a first co-pilot channel, which is responsible for a first expert domain and is dedicated to generating a processing result for a user request received through the first co-pilot channel, and a second agent is a host agent of a second co-pilot channel, which is responsible for a second expert domain and is dedicated to generating a processing result for a user request received through the second co-pilot channel.

In the present disclosure, it should be noted that "user request" should be understood in a comprehensive sense that includes both requesting an answer to a question and requesting to perform a specific action. In addition, it should be noted that "processing result" for a user query should be understood in a comprehensive sense that includes both outputting an answer to a question and reporting on an execution result of a specific action. For example, it should be understood that the service system 100 according to the present embodiment may provide an answer to a user's question or perform all processing for performing a user's specific action. Hereinafter, for convenience of understanding, the description will be based on the assumption that the user request is to perform a specific action.

The service system 100 may be connected to a knowledge base storage device 200 and an LLM service system 300. Through this connection, the first agent and the second agent may inquire information necessary to generate a processing result for a user request. The knowledge base storage device 200 is a database server for storing internal information of an institution that manages the service system 100, and may allow only access authorized by the institution. That is, the information stored in the knowledge base storage device 200 may be non-public information to an outsider of the institution. On the other hand, the LLM service system 300 may be a system that provides a request processing service based on a large language model (LLM) in which a large amount of public information is learned. That is, the first agent and the second agent may generate a processing result for a user request in consideration of both non-public information and public information.

The "co-pilot channel" mentioned in the present disclosure may be understood as a channel through which a user who is using specific client software or a specific online service of the user terminal 10 may input a request in the form of a natural language. That is, the first co-pilot channel may be a request processing channel provided to a user who is using first software (or a first online service), and the second co-pilot channel may be a request processing channel provided to a user who is using second software (or a second online service). A first expert domain of the first agent, which is responsible for the first co-pilot channel, may be understood as a field corresponding to an expert function of the first software (or the first online service), and a second expert domain of the second agent, which is responsible for the second co-pilot channel, may be understood as a field corresponding to an expert function of the second software (or the second online service).

The co-pilot channel may be visualized in the form of a co-pilot channel chat window displayed on the screen of the specific software displayed on the user terminal 10 or the screen displayed on the specific online service. However, the "co-pilot channel" of the present disclosure may receive a user request in the form of a user utterance, and in this case, it should be noted that the co-pilot channel chat window may not be displayed on the user terminal 10. In some embodiments, a visual indicator indicating that the co-pilot channel is listening to a user's voice may be displayed on the user terminal 10. The visual indicator may be understood as a graphic object displayed on a display of the user terminal 10. In some other embodiments, a sound indicator indicating that the co-pilot channel is listening to a user's voice may be played through the user terminal 10.

Meanwhile, when the first online service is enterprise resource planning (ERP), the first agent may have description of information related to the ERP and dialog-based automatic execution for functions of the ERP as expert domains, and when the second online service is customer relationship management (CRM), the first agent may have description of information related to the ERP and dialog-based automatic execution for functions of the ERP as expert domains. In this case, the co-pilot channel-based request processing service of the related art has difficulty in generating an appropriate processing result when a user request out of the expert domain of the agent that is responsible for the co-pilot channel is introduced. On the other hand, even though a user request out of the expert domain of the agent that is responsible for the co-pilot channel is introduced, the service system 100 may provide a function capable of generating an appropriate processing result by generating a processing result through collaboration between a plurality of agents. This will be described in detail.

Hereinafter, in the present disclosure, it is noted that an agent that is responsible for a specific co-pilot channel may be referred to as a host agent of the specific co-pilot channel.

When a user request is received through a first co-pilot channel 130a, the service system 100 transfers the user request to the first agent execution device 110a that executes the first agent that is responsible for the first co-pilot channel 130a. In this case, it may be understood that the first agent is the host agent of the first co-pilot channel 130a.

The first agent may determine whether it can process a task for generating a processing result of the user request by itself. For example, the first agent may define the task in a manner of sequentially performing a series of steps and determine whether some of the steps cannot be performed by the first agent. The first agent may determine that the task cannot be processed by the first agent when even some of the steps constituting the task may not be performed by the first agent.

When the task for generating a processing result for a user request cannot be processed by the co-pilot channel agent of the related art, the co-pilot agent of the related art only outputs a message that a processing result is impossible, whereas the first agent may additionally determine whether a processing result may be generated using another agent without outputting a message that a processing result is impossible even when a processing result for a user request cannot be generated `by itself. That is, the first agent may be functionally contrasted with the co-pilot channel agent of the related art in that it configures the task in a series of steps and identifies steps that cannot be performed by itself.

The first agent may request a large language model to configure the task. That is, the first agent may configure the task in a series of steps by inputting an automatically generated prompt to the large language model. In addition, the first agent may perform configuring the task in a series of steps by executing a task configuration logic based on a pre-implemented natural language processing.

For example, when the task includes a first step and a second step and the first agent may perform only the first step and cannot perform the second step, the first agent may perform an operation of identifying an agent capable of performing the second step among other agents operating in the service system 100. The first agent may identify an agent capable of performing the second step by using detailed information on each of a plurality of agents stored in the agent information storage device 120. FIG. 2 shows an example of detailed information on each of the plurality of agents.

Referring to FIG. 2, the detailed information on each agent may include a name of the agent, domain information in charge, access information, and permission information. The domain information in charge may be understood as information indicating an expert domain of a corresponding agent. As illustrated in FIG. 2, the domain information in charge may include a domain to which the corresponding agent belongs among a plurality of predefined domains, role information that is a text for defining a role of the corresponding agent, capability information that is a text for defining the capability of the corresponding agent, and one or more skill sets possessed by the corresponding agent.

The first agent may generate a large language prompt (hereinafter, abbreviated as "LLM prompt") by using the detailed information on each of the agents as shown in FIG. 2 in order to identify an agent capable of performing a step that cannot be performed by the first agent. The first agent may identify an agent capable of performing a step, which cannot be performed by the first agent, by inputting the generated LLM prompt to the LLM service system 300.

The detailed information on each of the agents stored in the agent information storage device 120 may be expressed in the form of a natural language. Even though the detailed information on the agent is freely stored in the formed of a natural language, the host agent may identify an agent capable of performing a step, which cannot be performed by the host agent, through an LLM service. For example, the host agent may automatically generate an LLM prompt that includes necessary information among the detailed information on each of the agents and information on a step for requesting execution of another agent and input the generated LLM prompt to the LLM service, thereby identifying an agent capable of performing a step, which cannot be performed by itself.

The agent information storage device 120 may reduce management burden of information stored in the agent information storage device 120 by storing the detailed information freely in the form of a natural language without having to regularize and store the detailed information or standardize and store the detailed information.

Referring back to FIG. 1, the first agent may identify that an agent capable of performing the second step is the second agent executed in the second agent execution device 110b, through the LLM service. In this case, the first agent may transmit a task processing request signal requesting processing of the second step to the second agent. In addition, the second agent may perform the second step in accordance with the task processing request signal and transmit the result of performing the second step to the first agent as external processing result data that is a response to the task processing request signal. The first agent may generate final processing result data by using the result received from the second agent, and may transmit contents of the final processing result data to the user terminal 10 through the first co-pilot channel 130a.

In some embodiments, the first agent may receive the external processing result data from each of the plurality of other agents, and may generate the final processing result data by using the received processing result data. For example, when the task consists of first to third steps and the first agent may perform only the first step and cannot perform the second step and the third step, the result of performing the second step may be received from the second agent as first external processing result data, and the result of performing the third step may be received from the third agent as second external processing result data. In this case, the first agent may transmit, to the third agent, a second task processing request signal requesting processing of a second portion of the steps constituting the task, may generate internal processing result data for the other portion except for the first portion and the second portion of the steps constituting the task, and may generate the final processing result data by using the first external processing result data received from the first agent in response to the first task processing request signal, the second external processing result data received from the third agent in response to the second task processing request signal, and the internal processing result data.

Meanwhile, unlike the examples described so far, there may be no step that can be processed by the first agent, which is the host agent of the first co-pilot channel 130a, among the steps included in the task for the processing result of the user request introduced through the first co-pilot channel 130a. In this case, the co-pilot channel of the related art will output only a statement that processing of the user request is impossible. However, in the embodiment according to the present disclosure, even though there is no step, which can be processed by the host agent, at all, when there is another agent in the service system 100, which is capable of processing each step, the processing result for the user request may be generated. For example, the first agent may generate final processing result data for the task consisting of the first step and the second step by using the execution result of the first step, which is received from the second agent, and the execution result of the second step, which is received from the third agent, and may output the generated final processing result data through the first co-pilot channel 130a.

The first agent and the second agent may transmit and receive the task processing request signal through a communication channel 140 between agents. The communication channel 140 between agents may support a natural language-based peer-to-peer (p2p) communication of a predefined format. Since the first agent and the second agent are software modules that process a natural language-based user request introduced through the first co-pilot channel 130a and the second co-pilot channel 130b, respectively, a function for natural language processing has been already implemented, and an additional function implementation will hardly be required in order to transmit and receive a message in the form of a natural language to and from another agent. Also, since p2p communication does not separately require a central management module for managing communication, the additional function implementation will be minimized. Therefore, since communication between agents is performed by a natural language-based p2p communication scheme of a predefined format, the development of an additional function for implementing the service system 100 of the present disclosure may be minimized as compared with the related art system for driving an agent that is responsible for the co-pilot channel.

Hereinafter, various configurations of the service system 100 will be described with reference to FIGS. 3 to 6.

In some embodiments, as shown in FIG. 3, a plurality of agents 110-1 and 110-2 may be executed in one agent execution device 110. In this case, in order to isolate the execution environment of the first agent 110-1 from the execution environment of the second agent 110-2, the first agent 110-1 may be executed in a first container (not shown), and the second agent 110-2 may be executed in a second container (not shown). The service system 100 may be a type of a compute instance provided through cloud services of the first container and the second container, and will be able to make sure of fixed computing resources for each of the first agent 110-1 and the second agent 110-2.

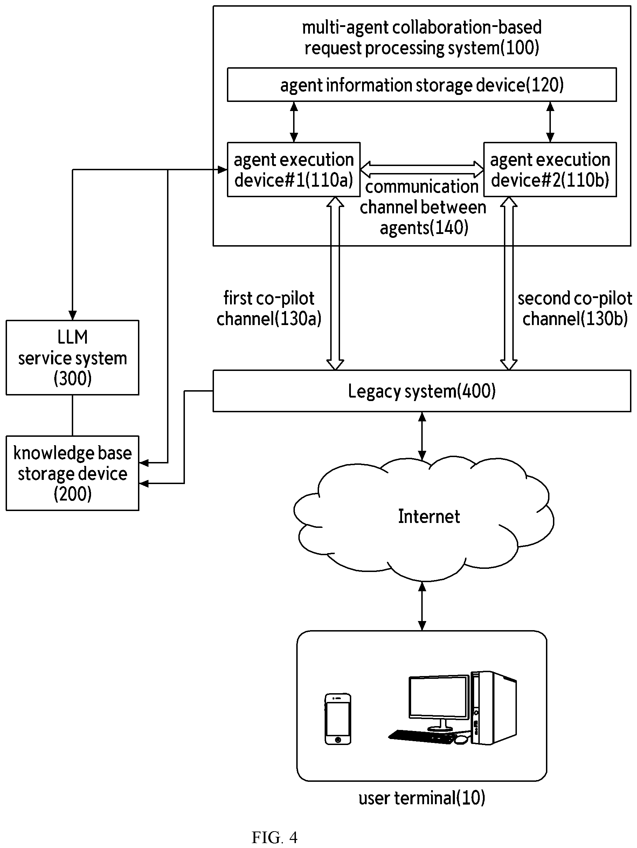

In some embodiments, as shown in FIG. 4, the service system 100 may provide a plurality of co-pilot channels 130a and 130b to a legacy system 400.

The legacy system 400 may be understood as a collective term for various online systems that have been conventionally provided, such as ERP systems, SCM systems, business portals and mail systems.

The knowledge base storage device 200 and the LLM service system 300 may be associated with the first agent execution device 110a that provides the first co-pilot channel 130a, whereas an external information request system such as the knowledge base storage device 200 and the LLM service system 300 may not be associated with the second agent execution device 110b that provides the second co-pilot channel 130a. As shown in FIG. 4, the knowledge base storage device 200 may be a device that stores information referenced in relation to the operation of the legacy system 400. That is, the first agent execution device 110a may process requests from various domains by using a knowledge base generated or referenced in the course of operating the legacy system 400 and the LLM service. On the contrary, the second agent execution device 110b may generate a processing result for a user request by using only information configured autonomously in the second agent execution device 110b and an API that may be executed autonomously by the second agent execution device 110b.

That is, it may be understood that the first agent execution device 110a considers more abundant information when generating a processing result for a user request than the second agent execution device 110b. That is, the service system 100 may provide a plurality of co-pilot channels 130a and 130b having different coverages of information to the legacy system 400, such that a user of the user terminal 10 may use a co-pilot service that meets a budget. In this case, the service cost of the first co-pilot channel 130a may be higher than the service cost of the second co-pilot channel 130b.

The above-described embodiment may be also applied to the request processing system shown in FIG. 4. For example, when the agent executed in the second agent execution device 110b fails to execute some of the steps of the task for processing the user request introduced through the second co-pilot channel 130b, the agent may transmit a task processing request signal requesting processing of some of the steps to the agent executed in the first agent execution device 110b. In this case, even a user who uses the second co-pilot channel 130b of low cost will be able to receive a processing result content generated as a result of supplementing the agent's ability to be executed in the first agent execution device 110a when the user handles a slight time delay.

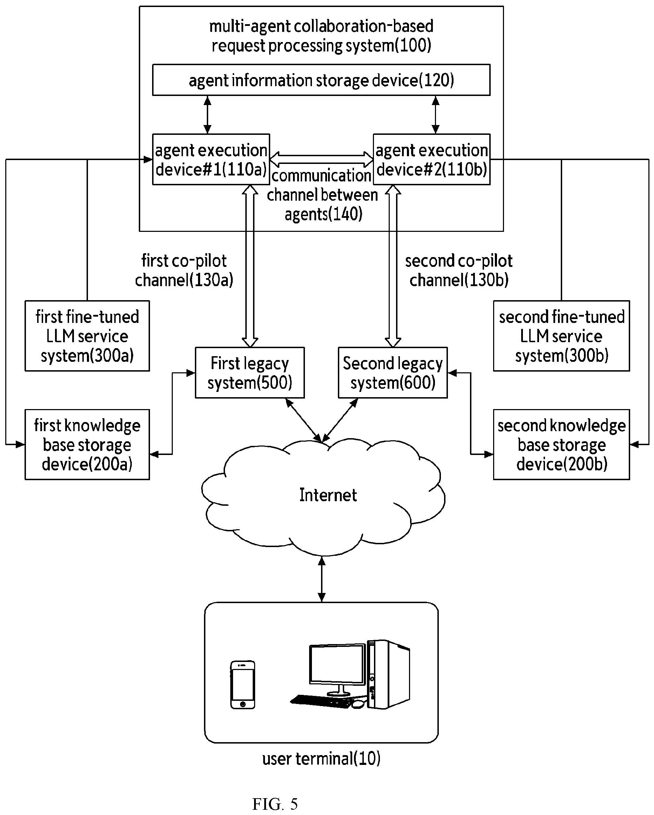

In some embodiments, as shown in FIG. 5, the service system 100 may provide the first co-pilot channel 130a to a first legacy system 500 and the second co-pilot channel 130b to a second legacy system 600, respectively. The first legacy system 500 and the second legacy system 600 may be understood as systems that provide online services that provide different functions from each other. For example, the first legacy system 500 may be an ERP system, and the second legacy system 600 may be an SCM system. For another example, the first legacy system 500 may be an ERP system, and the second legacy system 600 may be an e-mail system.

It is assumed that the first co-pilot channel 130a is a channel handled by the first agent executed in the first agent execution device 110a and the second co-pilot channel 130b is a channel handled by the second agent executed in the second agent execution device 110b. The first agent may generate a processing result for a user request introduced through the first co-pilot channel 130a by using a first large language model (LLM)-based service system 300a, and the second agent may generate a processing result for a user request introduced through the second co-pilot channel 130b by using a second large language model (LLM)-based service system 300b.

In this case, the first LLM may be fine-tuned using first learning data of a first domain, and the second LLM may be fine-tuned using second learning data of a second domain different from the first domain. In this case, the first domain corresponds to the first legacy system 500 in one-to-one, and the second domain corresponds to the second legacy system 600 in one-to-one. That is, when the first legacy system 500 is an ERP system, the first domain will be determined as an ERP service area, and when the second legacy system 600 is an SCM system, the first domain will be determined as an SCM service area. That is, the first LLM is fine-tuned using the first learning data configured to include knowledge related to ERP, and the second LLM is fine-tuned using the first learning data configured to include knowledge related to SCM.

Meanwhile, the first legacy system 500 may operate in connection with a first knowledge base storage device 200a generated or referenced in the course of operating the first legacy system 500. In this case, the first LLM may be fine-tuned using information of the first knowledge base storage device 200a as the first learning data. Also, the second LLM may be fine-tuned using information of a second knowledge base storage device 200b as the second learning data.

The above-described embodiment may be also applied to the request processing system shown in FIG. 5. For example, when the agent executed in the first agent execution device 110a fails to execute some of the steps of the task for the processing result of the user request introduced through the first co-pilot channel 130a, the agent may transmit a task processing request signal requesting processing some of the steps to the agent executed in the second agent execution device 110b. For example, when the first legacy system 500 is an ERP system and the second legacy system 600 is an SCM system, the co-pilot channel-based request processing service according to the related art may fail to generate a processing result when a request requesting at least one of SCM-related expert knowledge or SCM-related functions is input through the first co-pilot channel 130a of the ERP service. However, in the embodiments of the present disclosure, since the agent responsible for the first co-pilot channel 130a of the ERP service and the agent responsible for the second co-pilot channel 130b of the SCM service perform processing of the user request in collaboration with each other, the probability of processing failure of the request will be greatly reduced.

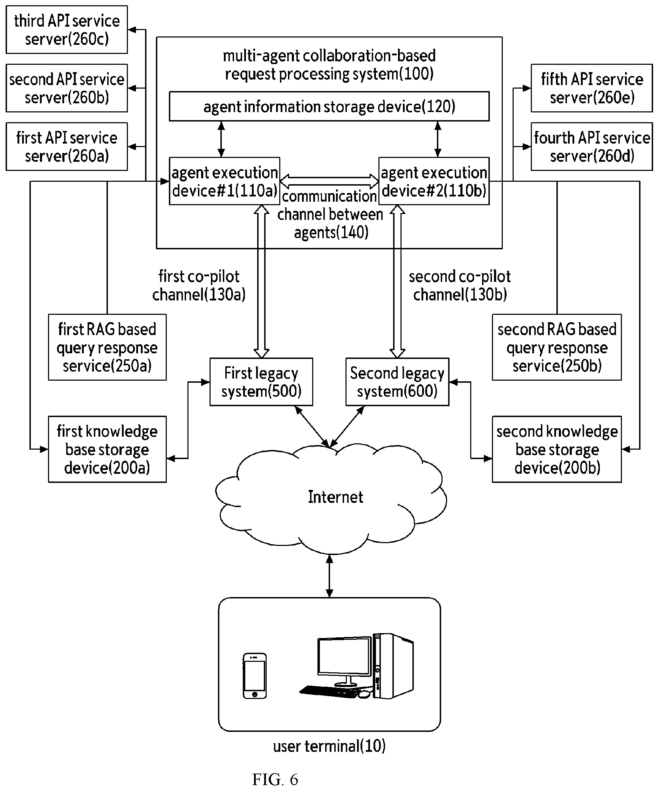

In some embodiments, as shown in FIG. 6, the first agent, which is responsible for the first co-pilot channel 130a provided to the first legacy system 500 and may be executed in the first agent execution device 110a, and the second agent, which is responsible for the second co-pilot channel 130b provided to the second legacy system 600 and may be executed in the second agent execution device 110b, may process the introduced user request by using different API pools and different kinds of reference information.

In more detail, the first agent may process a user request by using a first API set served by first to third API service servers 260a, 260b and 260c, a first RAG-based query response service 250a and the first knowledge base storage device 200a generated or referenced in the course of operating the first legacy system 500. In this case, the first RAG-based query response service 250a may be understood as a service for processing a target request by primarily performing a primary inquiry for the first knowledge base storage device 200a with respect to the target request, generating a prompt for the first LLM by using a primary answer generated as a result of the primary inquiry and inputting the generated prompt to the first LLM.

In addition, the second agent may process a user request by using a second API set served by fourth and fifth API service servers 260e and 260d, a second RAG-based query response service 250b and the second knowledge base storage device 200b generated or referenced in the course of operating the second legacy system 600. In this case, the second RAG-based query response service 250b may be understood as a service for generating a final processing result for the user request by primarily performing a primary inquiry for the second knowledge base storage device 200b with respect to the user request, generating a prompt for the second LLM using a primary answer generated as a result of the primary inquiry and inputting the generated prompt to the second LLM.

In short, it may be understood that the first agent responsible for the first co-pilot channel 130a and the second agent responsible for the first co-pilot channel 130b have different expert domains in terms of an available API set, a reference available knowledge base (non-public information) and a reference available RAG-based query response service. The above-described embodiment may be also applied to the request processing system shown in FIG. 6. That is, when the first agent fails to execute some steps of the task for a processing result of the user request introduced through the first co-pilot channel 130a, the first agent may transmit a task processing request signal requesting processing of some steps to the second agent.

Meanwhile, each of the first legacy system 500 and the second legacy system 600 may embed the above-described agents therein. That is, an agent module for generating a processing result for the co-pilot channel provided by the first legacy system 500 may be provided inside the first legacy system 500, and an agent module for generating a processing result for the co-pilot channel provided by the second legacy system 600 may be provided inside the second legacy system 600.

In this case, the above-described communication channel 140 between agents may be configured between the legacy systems 500 and 600. Hereinafter, the configuration and operation of the systems will be described. A communication channel between agents, which is configured between the legacy systems 500 and 600, may also support natural language-based p2p communication of a predefined format. In this case, it may be understood that the agents of the legacy systems 500 and 600 are responsible for a natural language-based mutual communication function between the legacy systems 500 and 600. That is, the agents of the legacy systems 500 and 600 may serve to handle the natural language-based mutual communication between the legacy systems 500 and 600 and at the same time, to generate a processing result for the co-pilot channel.

When a user request is introduced through the co-pilot channel of the first legacy system 500, the agent of the first legacy system 500 may determine whether it can process the task for generating the processing result for the user request, and when the agent determines that it cannot process the user request, the agent may transmit a first task processing request signal requesting processing of at least a portion of the steps constituting the task to the agent of the second legacy system 600.

In this case, when there is a third legacy system (not shown) that interworks with the first legacy system 500, the agent of the first legacy system 500 may decide by itself whether to transmit the first task processing request signal to the agent of the second legacy system 600 or the agent of the third legacy system. For example, the internal agents of the legacy system may inquire detailed information about the agent of each legacy system from the above-described agent information storage device, and the agent of the first legacy system 500 may decide by itself whether to transmit the first task processing request signal to the agent of the second legacy system 600 or the agent of the third legacy system by using the detailed information.

The agent of the first legacy system 500 may generate the final processing result data for the user request by using the external processing result data received from the agent of the second legacy system 600 in response to the first task processing request signal and output the final processing result data through the co-pilot channel of the first legacy system 500.

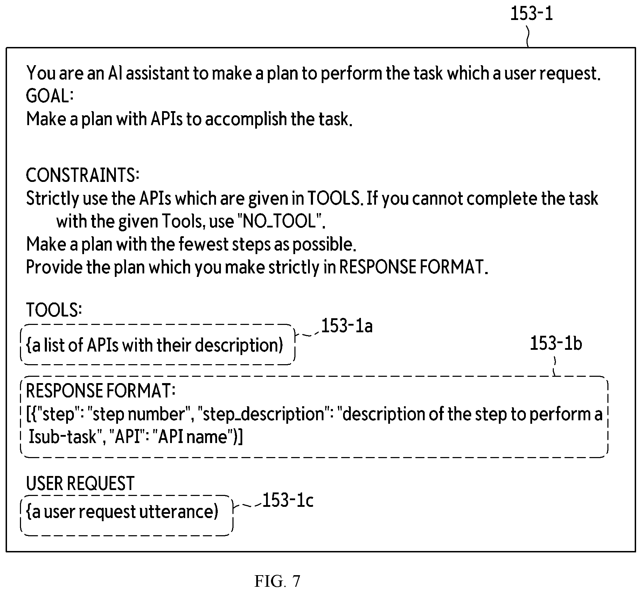

Hereinafter, the embodiments of FIGS. 7 to 13 will be described in more detail with reference to the embodiments described with reference to FIGS. 1 to 6.

FIG. 7 is a view illustrating an example of an LLM prompt generated to configure a task for generating a processing result for a user request in a step-by-step manner in some embodiments of the present disclosure. As described above, the host agent may configure a series of steps for a task to be performed to generate a processing result of the received user request. The host agent may process a process of generating the task from the user request by executing a natural language processing-based logic, or may process the process by generating an LLM prompt for requesting generation of the task and inputting the LLM prompt to the LLM.

In some embodiments, the LLM prompt may be input to an LLM referenced by the host agent to generate a processing result of a user request. For example, when the agent executed in the first agent execution device 110a of FIG. 5 is a host agent, the LLM prompt for generating a task for generating a processing result of a user request may be transmitted to the first LLM service system 300a. In this way, the LLM fine-tuned using learning data of a domain corresponding to the expert area of the host agent may be requested to generate a task for generating a processing result of a user request, so that a task optimized for the expert domain of the co-pilot channel into which a user request is introduced may be generated.

In some other embodiments, the LLM prompt may be input to a general-purpose LLM separate from the LLM referenced by the host agent to generate a processing result of a user request. Since the LLM referenced by the host agent to generate a processing result of a user request is fine-tuned using learning data of a domain corresponding to an expert area, a situation in which it is impossible to generate a task for a request in an area outside the domain may occur, whereby the LLM prompt may be input to the general-purpose LLM to increase a success probability of generating the task.

In some embodiments, the host agent may use a pre-learned AI model to determine whether a target LLM to request generation of the task as either an LLM, in which the host agent enters a prompt for processing a user request, or a general-purpose LLM separate from the LLM.

FIG. 7 is an example of the LLM prompt, and suggests an LLM prompt 153-1 that includes a purpose GOAL of a request for LLM, constraints CONSTRAINTS, available tools TOOLS 153-1a, a processing result format RESPONSE FORMAT 153-1b and a user request USER REQUEST 153-1c. The host agent may write information on an API set, which may be used by the host agent, in an area of the available tools TOOLS 153-1a, and may write a user request text in an area of the user request 153-1c. The host agent may write a predetermined processing result format in an area of the processing result format 153-1b.

The predetermined processing result format may be commonly applied to all agents operating in the above-described service system 100. Since all agents operating in the service system 100 generate LLM prompts by applying the same processing result format, the formats of tasks generated by the respective agents may be the same, and thus all agents operating in the service system 100 may understand a task generation result of other agents in the same manner.

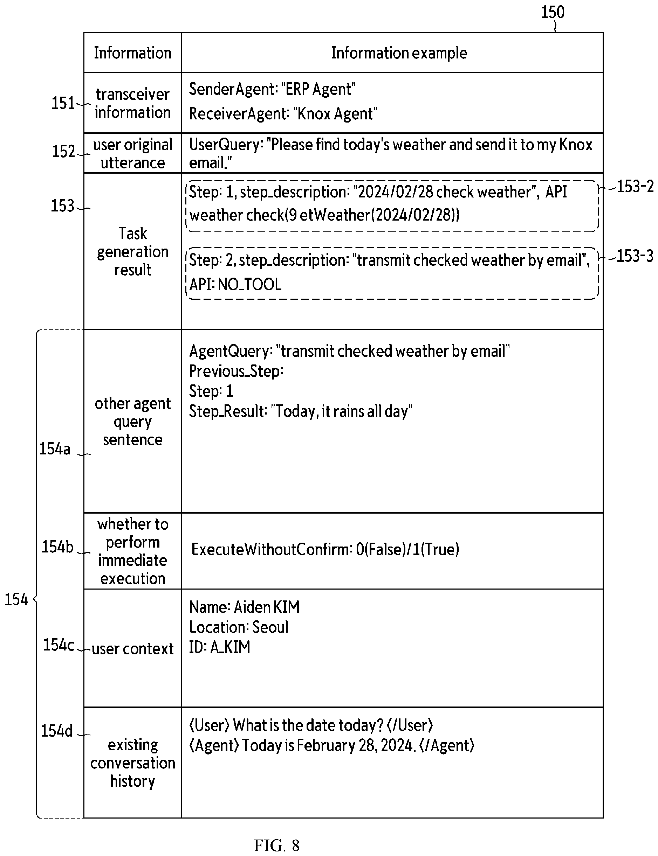

FIG. 8 is a view illustrating an example of a task processing request signal 150 transmitted and received between agents in some embodiments of the present disclosure. FIG. 8 is an exemplary format of natural language-based p2p communication of a task processing request signal transmitted from an agent responsible for a co-pilot channel of an ERP service to an agent responsible for a co-pilot channel of a Knox service (email service).

The task processing request signal 150 may include transceiver information 151, a user original utterance 152, a task generation result 153 and a task processing request body 154. In particular, the task processing request signal 150 may essentially include a task processing request body 154, and the task processing request body 154 may essentially include other agent query sentence 154a that includes a text of a request target step and a result text of a previous step of the request target step.

The transceiver information 151 is information for identifying a transceiver required in a p2p communication process of the task processing request signal 150, and may include a name of a sender agent and a name of a recipient agent. The name of each agent may be understood as a name included in detailed information on each of a plurality of agents that may be stored in the agent information storage device 120.

The task generation result 153 is expressed as a text generated in accordance with the processing result format 153-1b described with reference to FIG. 7. According to the task generation result 153, the task 153 for generating the processing result for the user original utterance 152 ("find today's weather and send my Knox email") consists of a weather inquiry step 153-2 using a weather inquiry API and an email sending step 153-3, and it may be seen that the email sending step 153-3 is a step that cannot be performed by the host agent (ERP agent). This is because "NO_TOOL" is written in the email sending step 153-3 as a value of an API field, which means that there is no corresponding API among APIs that can be paged by the host agent.

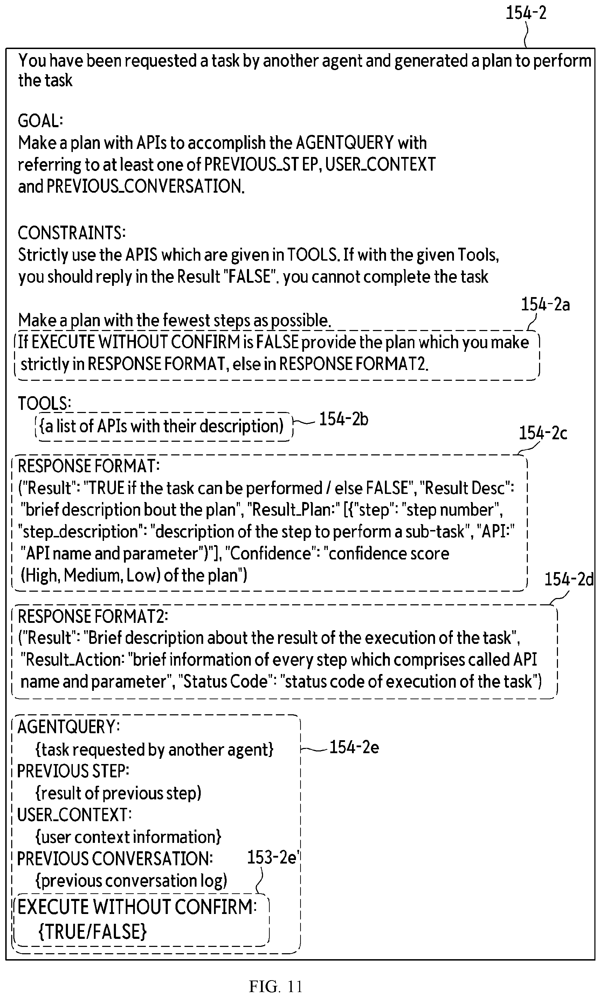

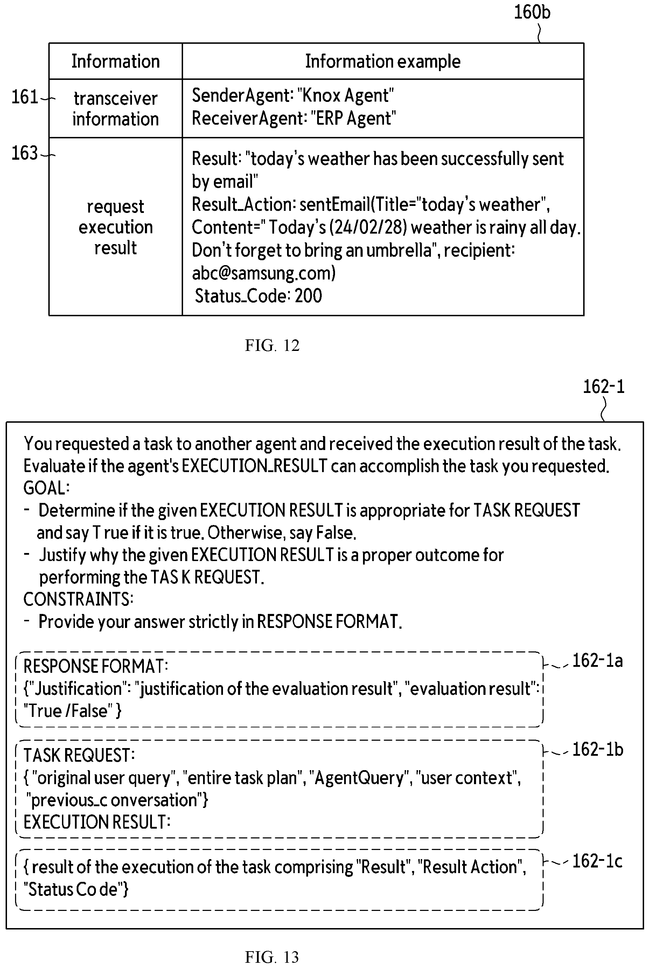

The host agent (ERP agent) generates the task processing request signal 150 in accordance with the task generation result 153, and the task processing request signal 150 may include other agent query sentence 154a requesting execution of the email sending step 153-3, which is the step that cannot be performed by the host agent (ERP agent). The task processing request body 154 may further include user context information 154c including information on user's personal information so that it may be referenced by the recipient agent to perform the email sending step 153-3, and user's existing conversation history information 154d. Also, the task processing request body 154 may further include an immediate execution flag 154c indicating whether the agent for receiving the task processing request signal 150 immediately generates first external processing result data according to the task processing request signal 150. An operation related to the immediate execution flag 154c will be described in more detail with reference to FIGS. 11 and 12.

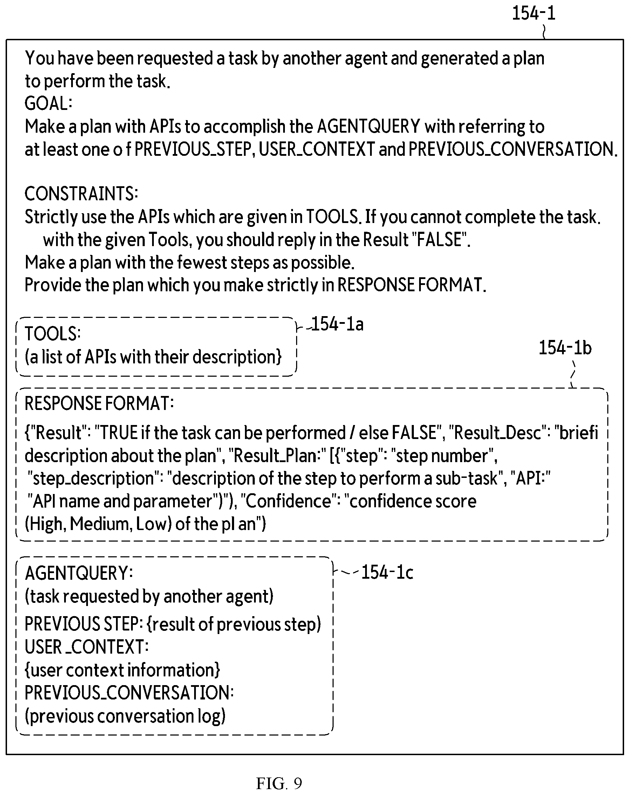

Next, an exemplary LLM prompt 154-1 generated by another agent (hereinafter, referred to as "recipient agent") which has received the task processing request signal 150 from the host agent to configure a task corresponding to the text of the request target step included in the task processing request signal 150 in a step-by-step manner will be described with reference to FIG. 9

FIG. 9 is an exemplary LLM prompt 154-1 that includes a purpose GOAL of a request for LLM, constraints CONSTRAINTS, available tools TOOLS 154-1a, a processing result format RESPONSE FORMAT 154-1b, and a task processing request body 154-1c included in the task processing request signal 150. The recipient agent may write information on an available API set in an area of the available tools TOOLS 154-1a, and may write the text of the task processing request body included in the task processing request signal 150 in the area of the task processing request body 154-1c.

The recipient agent may generate the LLM prompt 154-1, receive a task definition result of a step-by-step manner from an LLM that has received the LLM prompt 154-1 and transmit the task definition result to the host agent. When one or more non-performance steps are included in the received task definition result, the recipient agent may determine that it cannot process a task for generating a processing result for the user request by itself and transmit a non-performance processing result to the host agent.

In some embodiments, when a value of the immediate execution flag 154b included in the task processing request signal 150 is a value FALSE indicating that the recipient agent should not immediately perform execution of the request target step according to the task processing request signal 150, the recipient agent may generate the LLM prompt 154-1 such that the LLM receiving the LLM prompt 154-1 outputs a confidence level of the task definition result according to the LLM prompt 154-1. To this end, it may be confirmed that a description of "Confidence:" is included in the processing result format 154-1b of the LLM prompt 154-1. Upon receiving the LLM prompt 154-1 for which the output of the confidence level is requested, the LLM will self-evaluate the confidence level for the task definition result of the step-by-step manner and output the confidence level evaluated as one of High/Medium/Low as specified in the processing result format 154-1b.

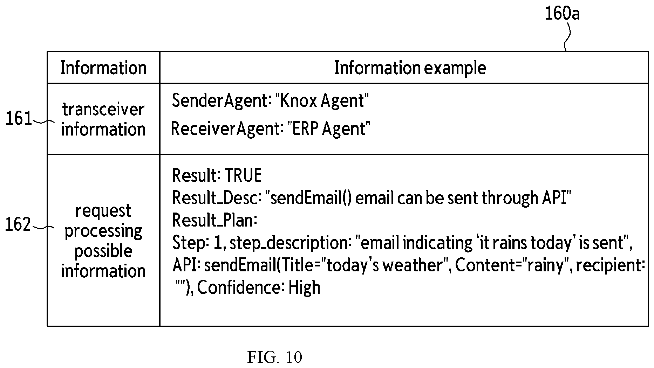

FIG. 10 is an example of a response signal 160a generated by the recipient agent with respect to the task processing request signal 150 when the value of the immediate execution flag 154b is a value FALSE indicating that the recipient agent should not immediately perform the execution of the request target step according to the task processing request signal 150. The response signal 160a may include transceiver information 161 and request processing possible information 162 on whether the recipient agent may process the request target step according to the task processing request signal 150.

Meanwhile, when the host agent receives the response signal 160a including the request processing possible information 162 indicating processing possibility of the request target step from a plurality of recipient agents, the host agent may determine priority for each of the recipient agents.

The host agent may determine the priority based on the confidence level included in the request processing possible information 162. For example, the host agent may determine a recipient agent having the highest confidence level included in the request processing possible information 162 as a final recipient of the task processing request signal 150. Meanwhile, when a plurality of recipient agents reply through the request processing possible information 162 that the request target step can be processed and the confidence level is High, the host agent may additionally reflect the result of adequacy evaluation as a result of execution of the request target step described below with reference to FIG. 13 in determination of the priority for each of the recipient agents. That is, the host agent determines the recipient agent having the highest confidence level included in the request processing possible information 162 received from the recipient agent as the final recipient of the task processing request signal 150, but when one final recipient is not determined by the confidence level, the final recipient of the task processing request signal 150 may be determined in consideration of the record of the adequacy evaluation of the processing result for the previous task processing request signal.

Also, in some embodiments, when the confidence level included in the request processing possible information 162 is a predetermined reference value or more, the host agent may determine the priority based on the corresponding reference.

In FIG. 11, an exemplary LLM prompt 154-2 generated by the recipient agent to configure a task corresponding to the text of the request target step included in the task processing request signal 150 in a step-by-step manner is shown.

The LLM prompt 154-2 shown in FIG. 11 may include a request syntax 154-2a, which is generated by dividing a case in which the value of the immediate execution flag 154b is TRUE and a case in which the value of the execution flag 154b is FALSE. The LLM prompt 154-2 may include a purpose GOAL of a request for LLM, constraints CONSTRAINTS, available tools TOOLS 154-2b, a processing result format RESPONSE FORMAT 154-2c when the value of the immediate execution flag 154b is FALSE, a processing result format RESPONSE FORMAT2 154-2d when the value of the immediate execution flag 154b is TRUE, and a task processing request body 154-2e included in the task processing request signal 150.

The recipient agent may write information on the available API set in an area of the available tool TOOLS 154-2b and write a text of the task processing request body included in the task processing request signal 150 in an area of the task processing request body 154-2e. Like the LLM prompt 154-2 shown in FIG. 11, the task processing request body 154-2e may include a text 153-2e' in which the value of the immediate execution flag is written.

FIG. 12 is an example of a response signal 160b generated by the recipient agent with respect to the task processing request signal 150 in which the value of the immediate execution flag 154b is set to TRUE. The response signal 160b may include transceiver information 161 and information 163 on the result of the request target step executed by the recipient agent in accordance with the task processing request signal 150.

The LLM prompt 154-2 specifies an instruction 154-2a to generate a processing result in accordance with a processing result format 2 154-2d when the value of the immediate execution flag 154b is TRUE, and thus it may be confirmed that a format of the information 163 on the execution result of the request target step is caused by the processing result format 2 154-2d of the LLM prompt 154-2 described with reference to FIG. 11.

As described above, the host agent may receive the execution result of the request target step and generate final processing result data for the user request.

In addition, the host agent may generate an LLM prompt for evaluating the execution result of the request target step, which is received from the recipient agent in response to the task processing request signal, receive the result of evaluation from the large language model that has received the large language model prompt and store the result of evaluation in order to reflect it in determining a recipient of the task processing request signal.

FIG. 13 illustrates an exemplary LLM prompt 162-1 for evaluating the execution result of the request target step received from the recipient agent. The LLM prompt 162-1 may include a processing result format 162-1a of evaluation of the execution result, a task processing request body 162-1b transmitted by the host agent to the recipient agent, and a request target step execution result 162-1c. The host agent may complete the LLM prompt 162-1 by automatically writing actual information in the task processing request body 162-1b and the request target step execution result 162-1c, which are transmitted by the host agent to the recipient agent, and then may input the LLM prompt to the LLM.

The LLM that has received the LLM prompt 162-1 from the host agent will evaluate whether the request target step execution result 162-1c is appropriate for the execution of a task for processing a user request as described in the LLM prompt 162-1 and output a result according to the evaluation result format 162-1a.

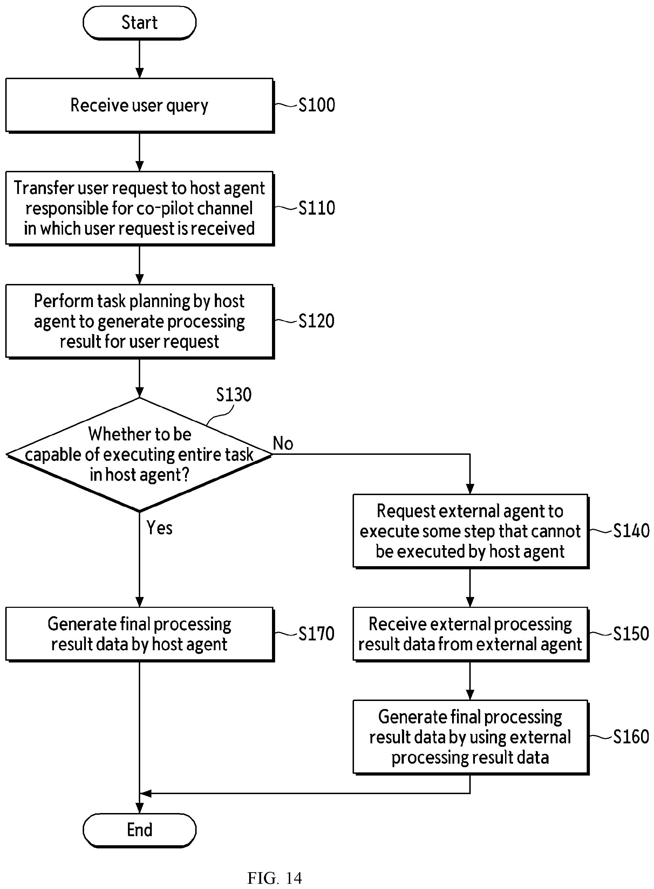

Next, a method for request processing based on multi-agent collaboration according to another embodiment of the present disclosure will be described with reference to FIG. 14. The request processing method according to the present embodiment may be performed by one or more computing systems. In addition, in the request processing method, a partial operation may be performed by a first computing device, and the other operation may be performed by a second computing device. Hereinafter, description of a subject of performing each operation may be omitted. In this case, it will be understood that the subject of performing each operation is a computing system. In addition, it should be noted that the technical spirits understood from the embodiments described with reference to FIGS. 1 to 13 may be clearly applied to the request processing method according to the present embodiment even though there is no separate mention.

A user request is received through a channel such as a co-pilot channel (S 100). The user request may be transferred to a host agent responsible for the co-pilot channel (S 110). The host agent may plan a task in order to generate a processing result for the user request (S120). Through the planning process of the task, the task consisting of a series of steps may be defined.

The host agent may perform the task planning by executing the pre-implemented task planning logic, or may generate an LLM prompt requesting task planning by executing the pre-implemented LLM prompt generating logic and perform the task planning by inputting the generated LLM prompt to the LLM.

The host agent determines whether to be capable of executing all steps included in the task by itself (S 130). For example, when there are one or more steps, which cannot be performed by using any one of APIs included in a pageable API set of the host agent, among the steps included in the task, it may be determined that the host agent cannot execute the task by itself.

When the host agent can execute all steps included in the task by itself, the host agent will execute all steps of the task, then generate a processing result by using the executed result and output the generated processing result in response to the user request (S 170).

On the other hand, when the host agent cannot execute at least a portion of all steps included in the task by itself, the host agent may request an external agent to execute the step, which cannot be executed by the host agent, among the steps included in the task (S140). The external agent may be selected from all agents of which information is stored in the agent information storage device 120 described with reference to FIG. 1 or from some of all agents, which meet a step execution request range policy set in the host agent.

The host agent may receive a step execution result from the external agent (S 150), and may generate a final processing result by using the received step execution result (S160). In this case, the host agent may generate the final processing result by synthesizing the execution result of some steps generated by the host agent and the execution result of some steps received from the external agent, may generate the final processing result by synthesizing the execution result of some steps generated by the host agent and the execution results of some steps received from a plurality of external agents, may generate the execution results of all tasks received from the external agent as the final processing result, or may generate the final processing result by synthesizing the execution results of some steps received from the plurality of external agents.

Next, the host agent may transmit data of the final processing result to a user terminal that has transmitted the user request through a channel into which the user request is introduced.

The methods according to the embodiment of the present disclosure described so far may be performed by execution of a computer program implemented with a computer-readable code. The computer program may be transmitted from the first computing device to the second computing device through a network such as Internet and thus may be installed in the second computing device, thereby being used in the second computing device.

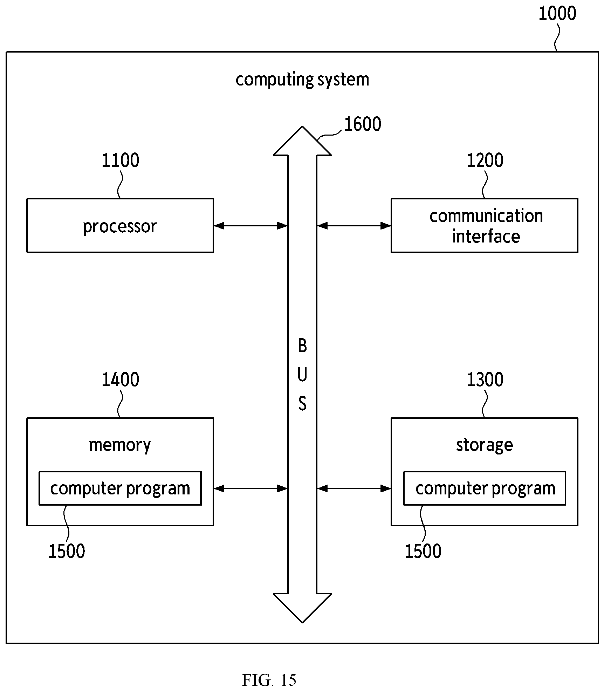

FIG. 15 is a hardware schematic view illustrating a computing system according to some embodiments of the present disclosure. The computing system 1000 of FIG. 15 may include one or more processors 1100, a system bus 1600, a communication interface 1200 connected with a buyer user terminal, a memory 1400 for loading a computer program 1500 performed by the processor 1100, and a storage 1300 for storing the computer program 1500.

The processor 1100 controls the overall operation of each component of the computing system 1000. The processor 1100 may perform computation for at least one application or program for executing the methods/operations according to various embodiments of the present disclosure. The memory 1400 stores various data, commands and/or information. The memory 1400 may load one or more computer programs 1500 from the storage 1300 to execute the methods/operations according to various embodiments of the present disclosure. The memory 1400 may non-temporarily store one or more computer programs 1500.

The computer program 1500 may include one or more instructions in which the methods/operations according to various embodiments of the present disclosure are implemented. When the computer program 1500 is loaded into the memory 1400, the computer program 1500 may perform the methods/operations according to various embodiments of the present disclosure by executing the one or more instructions.

For example, the computing system of FIG. 15 may be a computing device included in the multi-agent collaboration-based request processing system 100 described with reference to FIG. 1. In this case, the computing system described with reference to FIG. 15 may be configured using one or more physical servers included in a server farm based on the cloud technology such as a virtual machine. In this case, at least some of the processor 1100, the memory 1400 and the storage 1300 among the components shown in FIG. 15 may be virtual hardware, and the communication interface 1200 may be also configured with a virtualized networking element such as a virtual switch.

The computer program 1500 according to one embodiment may include an instruction for acquiring a user request introduced through a first co-pilot channel, an instruction for generating a large language model prompt to configure a task for generating a processing result for the user request in a step-by-step manner and receiving a task definition result of a step-by-step manner from a large language model that has received the large language model prompt, an instruction for determining whether a first agent responsible for the first co-pilot channel can process the user request by itself, by using the task definition result, an instruction for transmitting a first task processing request signal requesting processing for at least some of steps constituting the task to a second agent when the first agent determines that it cannot process the user request by itself, and an instruction for generating final processing result data for a user query by using first external processing result data received from the second agent in response to the first task processing request signal and outputting the final processing result data through the first co-pilot channel. In this case, the second agent may be responsible for processing a user query introduced through a second co-pilot channel which is a channel separate from the first co-pilot channel. The computer program 1500 may be executed for the operation of the agent described above.

Although the operations are shown in a specific order in the drawing, it should not be understood that the operations should be executed in a specific order or sequential order shown or that all shown operations should be executed to obtain a desired result. In specific situations, multitasking and parallel processing may be advantageous.

So far, a variety of embodiments of the present disclosure and the effects according to embodiments thereof have been mentioned with reference to FIGS. 1 to 11. The effects according to the technical idea of the present disclosure are not limited to the forementioned effects, and other unmentioned effects may be clearly understood by those skilled in the art from the description of the specification.

The technical features of the present disclosure described so far may be embodied as computer readable codes on a computer readable medium. The computer readable medium may be, for example, a removable recording medium (CD, DVD, Blu-ray disc, USB storage device, removable hard disk) or a fixed recording medium (ROM, RAM, computer equipped hard disk). The computer program recorded on the computer readable medium may be transmitted to other computing device via a network such as internet and installed in the other computing device, thereby being used in the other computing device.

Although operations are shown in a specific order in the drawings, it should not be understood that desired results can be obtained when the operations must be performed in the specific order or sequential order or when all of the operations must be performed. In certain situations, multitasking and parallel processing may be advantageous. According to the above-described embodiments, it should not be understood that the separation of various configurations is necessarily required, and it should be understood that the described program components and systems may generally be integrated together into a single software product or be packaged into multiple software products.

In concluding the detailed description, those skilled in the art will appreciate that many variations and modifications can be made to the preferred embodiments without substantially departing from the principles of the present disclosure. Therefore, the disclosed preferred embodiments of the disclosure are used in a generic and descriptive sense only and not for purposes of limitation.

## Claims

1. A system for request processing based on multi-agent collaboration in a system providing a request processing service, the system comprising:
an agent information storage device storing detailed information on each of a plurality of agents, the detailed information including information on a responsible field of each agent; and
an agent execution system executing a first agent responsible for processing a user request introduced through a first channel and a second agent responsible for processing a user request introduced through a second channel different from the first channel,
wherein the first agent determines whether to be capable of processing a task for generating a processing result for the user request by itself, and when the first agent determines that it cannot process the task by itself, transmits, to the second agent, a first task processing request signal requesting to process at least a portion of steps constituting the task, and
the second agent is determined among the plurality of agents by using the detailed information on each of the plurality of agents.

2. The system of claim 1, wherein the first agent generates a final processing result for the user request by using first external processing result data received from the second agent in response to the first task processing request signal, and outputs the final processing result through the first channel.

3. The system of claim 2, wherein the first task processing request signal is to request processing of a first portion of the steps constituting the task, and
the first agent generates an internal processing result for the other portion except the first portion among the steps constituting the task and generates the final processing result by using the first external processing result and the internal processing result.

4. The system of claim 2, wherein the first task processing request signal is to request processing of the first portion of the steps constituting the task,
the agent execution system further executes a third agent responsible for processing a user query introduced through a third channel different from the first channel and the second channel, and
the first agent further transmits, to the third agent, a second task processing request signal requesting processing of a second portion of the steps constituting the task, generates an internal processing result for the other portion except the first portion and the second portion among the steps constituting the task, and generates the final processing result by using a second external processing result received from the third agent in response to the second task processing request signal, the first external processing result and the internal processing result.

5. The system of claim 1, wherein the information on the responsible field includes domain information, role information, capability information and one or more skill sets.

6. The system of claim 1, wherein the first agent processes the user request introduced through the first channel by using a first large language model (LLM) and the second agent processes the user request introduced through the second channel by using a second large language model, and
the first large language model is fine-tuned using first learning data including knowledge of a first domain and the second large language model is fine-tuned using second learning data including knowledge of a second domain different from the first domain.

7. The system of claim 6, wherein the first agent processes the user request introduced through the first channel by further using a first API set and processes the user request introduced through the second channel by further using a second API set, and
the second API set includes one or more APIs that are not included in the first API set.

8. The system of claim 1, wherein the first agent processes a user request introduced through a first co-pilot channel by using a first large language model and a first API set,
the second agent processes a user request introduced through a second co-pilot channel by using the first large language model and a second API set, and
the second API set includes one or more APIs that are not included in the first API set.

9. The system of claim 1, wherein the first agent transmits the first task processing request signal to the second agent by using natural language-based peer-to-peer (p2p) communication of a predefined format, and
the second agent transmits data of a first external processing result, which is a response to the first task processing request signal, to the first agent.

10. The system of claim 9, wherein the first task processing request signal has a format that includes a text of a request target step and a result text of a previous step of the request target step.

11. The system of claim 10, wherein the first task processing request signal has a format that further includes an immediate execution flag indicating whether the second agent will immediately perform generation of a first external processing result according to the first task processing request signal.

12. The system of claim 10, wherein the first task processing request signal has a format that further includes user context information of a user who has input the user request.

13. The system of claim 1, wherein the first agent generates a large language model prompt for configuring a task for generating a processing result for the user request in a step-by-step manner and receives a task definition result of a step-by-step manner from a large language model that has received the large language model prompt.

14. The system of claim 13, wherein the first agent determines that it cannot process a task for generating a response processing result for the user request by itself when the received task definition result includes one or more steps that cannot be performed by the first agent.

15. The system of claim 14, wherein the first agent determines a first step as a step that cannot be performed by the first agent when an API to be paged for performing the first step among one or more steps included in the task definition result does not exist in a list of APIs that can be paged by the first agent.

16. The system of claim 13, wherein the large language model transmitting the task definition result of the step-by-step manner to the first agent is used by the first agent to generate a final processing result for the user request introduced through the first channel and is fine-tuned using first learning data of a first domain corresponding to the first agent,

17. The system of claim 1, wherein the second agent generates a large language model prompt for configuring a task corresponding to a text of a request target step included in the first task request signal in a step-by-step manner, receives a task definition result of a step-by-step manner from a large language model that has received the large language model prompt, and transmits the received task definition result to the first agent in response to the first task processing request signal.

18. The system of claim 17, wherein the second agent generates the large language model prompt specifying an output format to include confidence level information of the task definition result and allows the confidence level information to be further included in the task definition result transmitted to the first agent, when a value of an immediate execution flag included in the first task processing request signal is a value indicating that the second agent should not immediately generate a first external processing result according to the first task processing request signal.

19. The system of claim 18, wherein the first agent finally determines whether to request the second agent to execute the request target step by using the confidence level information included in the task definition result received from the second agent.

20. The system of claim 1, wherein the second agent generates a large language model prompt for configuring a task corresponding to a text of a request target step included in the first task request signal in a step-by-step manner, receives a task definition result of a step-by-step manner from a large language model that has received the large language model prompt, determines that it cannot process the task corresponding to the text of the request target step included in the first task request signal by itself when one or more steps that cannot be processed by the second agent are included in the task definition result received from the large language model, and transmits a signal expressing non-performance to the first agent in response to the first task request signal.

21. The system of claim 1, wherein the first agent generates a large language model prompt for evaluating first external processing result data received from the second agent in response to the first task processing request signal, receives an evaluation result of the first external processing result data from a large language model that has received the large language model prompt, and uses the evaluation result of the first external processing result data when determining whether to transmit, to the second agent, the first task processing request signal for a subsequent user request introduced through the first channel.

22. A method for request processing based on multi-agent collaboration, which is performed by a computing system, the method comprising:
acquiring a user request introduced through a first channel;
generating a large language model prompt for configuring a task for generating a processing result for the user request in a step-by-step manner and receiving a task definition result of a step-by-step manner from a large language model that has received the large language model prompt;
determining whether the first agent responsible for the first channel can process the user request by itself, by using the received task definition result;
providing the second agent with a first task processing request signal for requesting processing of at least a portion of steps constituting the task when the first agent determines that it cannot process the user request by itself; and
generating a final processing result for the user request by using first external processing result data provided from the second agent as a response to the first task processing request signal, and outputs the final processing result,
wherein the second agent is a software module responsible for processing a user request introduced through a second channel which is a channel separate from the first channel.
